# EUROPÄISCHE PATENTSCHRIFT

(11) **EP 1 543 604 B1**
(45) Veröffentlichungstag und Bekanntmachung des Hinweises auf die Patenterteilung: **29.11.2006**
(21) Anmeldenummer: 03798074.5
(22) Anmeldetag: 22.09.2003
(51) Int. Cl.: H02K 15/02, H02K 1/16

(54) **STREIFENFÖRMIGE LAMELLE SOWIE STÄNDERBLECHPAKET FÜR EINE ELEKTRISCHE MASCHINE**
STRIP-TYPE LAMINA AND LAMINATED STATOR CORE FOR AN ELECTRIC MACHINE
LAME EN FORME DE BANDE ET EMPILAGE DE TOLES DE STATOR POUR UNE MACHINE ELECTRIQUE

(30) Priorität: 20.09.2002 DE 10243979
(43) Veröffentlichungstag der Anmeldung: 22.06.2005
(73) Patentinhaber: ROBERT BOSCH GMBH, 70442 Stuttgart (DE)
(72) Erfinder: PFLÜGER, Klaus, 71735 Eberdingen (DE); HENNE, Martin, 71696 Möglingen (DE); HAHN, Rolf-Dieter, 70599 Stuttgart (DE); HARRER, Wolfgang, 70839 Gerlingen (DE); BERGER, Thomas, 71254 Ditzingen (DE); RAU, Eberhard, 70825 Korntal-Muenchingen (DE)
(86) Internationale Anmeldenummer: PCT/DE2003/003154
(87) Internationale Veröffentlichungsnummer: WO 2004/030185

(56) Entgegenhaltungen:
- US-A- 4 901 428
- PATENT ABSTRACTS OF JAPAN vol. 1998, no. 13, 30. November 1998 (1998-11-30) -& JP 10 225027 A (DENSO CORP), 21. August 1998 (1998-08-21)
- PATENT ABSTRACTS OF JAPAN vol. 1995, no. 06, 31. Juli 1995 (1995-07-31) -& JP 07 087714 A (SANKYO SEIKI MFG CO LTD), 31. März 1995 (1995-03-31)
- PATENT ABSTRACTS OF JAPAN vol. 008, no. 167 (E-258), 2. August 1984 (1984-08-02) -& JP 59 063940 A (MATSUSHITA DENKI SANGYO KK), 11. April 1984 (1984-04-11)
- PATENT ABSTRACTS OF JAPAN vol. 009, no. 181 (E-331), 26. Juli 1985 (1985-07-26) & JP 60 051426 A (MATSUSHITA DENKI SANGYO KK), 22. März 1985 (1985-03-22)

## Beschreibung

### Stand der Technik

Die Erfindung betrifft eine streifenförmige Lamelle für einen Ständer einer elektrischen Maschine sowie ein Ständerblechpaket aus solchen streifenförmigen Lamellen. Aus der deutschen Offenlegungsschrift DE-OS 26 29 532 ist bereits ein Ständer für eine elektrische Maschine bekannt, der aus einem zunächst in flacher Form vorliegendem Eisenpaket hergestellt ist. Dazu werden streifenförmige, mit Nuten versehenen Lamellen so angeordnet, dass diese ein flaches Lamellenpaket bilden. Dabei sind alle Nuten der einzelnen Lamellen in die gleiche Richtung orientiert, sodass sich insgesamt eine kammartige Anordnung dieses Pakets ergibt. Dieses an sich flache Paket wird nachfolgend Flachpaket genannt. Dieses Flachpaket wird in einem weiteren Schritt so rund gebogen, dass sich ein wie übliche ringförmige Ständerblechpakete verwendbares Ständerblechpaket ergibt. Ein weiteres Beispiel ist in US 4901428 veröffentlicht worden.

In einem ersten Ausführungsbeispiel ist im Stand der Technik ein Flachpaket bekannt, das auf seiner den Zähnen abgewandten Rückseite des Flachpakets Nuten aufweist, die als bevorzugte Faltpunkte wirken sollen. Es soll sich eine zylindrische Fläche mit polygonaler Basis ergeben, wobei die Spitzen des Polygons von den Achsen der Nuten gebildet werden. In einem weiteren Ausführungsbeispiel wird dort ein Flachpaket vorgeschlagen, dass hinter jedem einem späteren Rotor zugewandten Zahn eine Nut aufweist. Beiden Ständerblechpaketen ist gemein, dass die rund gebogenen Flachpakete trotz ihrer weitgehenden Rundheit nicht nur verhältnismäßig stark polygonal ausgebildet sind, sondern auch gleichzeitig verhältnismäßig starke Aufwellungen der Lamellen aufweisen. Diese Aufwellungen beeinträchtigen die Eigenschaften des Flachpakets bzw. des Rundpakets mehr oder weniger stark. Ab einer bestimmten Jochhöhe sind die Verformungen so groß, dass die erforderlichen Form- und Lagetoleranzen des Pakets unzulässig werden.

### Vorteile der Erfindung

Die erfindungsgemäße streifenförmige Lamelle mit den Merkmalen des Hauptanspruchs hat den Vorteil, dass durch das Positionieren der zweiten Zähne an einer Position der ersten Zähne dies zu einem verhältnismäßig langen ungeschwächten Querschnitt des Jochs bzw. Jochbereichs führt und sich somit eine sehr gute Rundheit der gebogenen streifenförmige Lamelle bzw. des aus solchen streifenförmigen Lamellen gefertigten Ständerblechpakets ergibt. Zu Unrundheit führende Knickstellen werden weitestgehend vermieden. Um einen guten Wirkungsgrad zwischen dem fertigen Ständer und dem Läufer zu erhalten, ist eine sehr gute Rundheit und damit ein kleiner, möglichst gleichförmiger Spalt zwischen Ständer und Läufer erforderlich. Durch die vorgeschlagenen Maßnahmen wird eine Nacharbeit an der Innenseite des Ständers nicht erforderlich, sodass die vorgeschlagenen Maßnahmen von wirtschaftlicher Bedeutung sind. Das Biegeergebnis und damit die Rundheit des Ständers wird dadurch gefördert, dass ein Nutgrund zwischen je zwei ersten Zähnen im wesentlichen gerade verläuft.

Ein besonders gutes Biegeergebnis wird erzählt, wenn der Nutgrund zwischen je zwei ersten Zähnen in erster Näherung zumindest 50% gerade verläuft. In zweiter Näherung wird ein Wert von zumindest 60% bevorzugt. Besonders günstig ist ein Wert zwischen 60% und 70%.

Eine weitere Steigerung der Qualität des Biegeergebnisses wird dadurch erhalten, in dem ein Nutgrund zwischen je zwei zweiten Zähnen ebenfalls im wesentlichen gerade verläuft, wobei sich eine weitere Steigerung der Qualität ergibt, wenn der kürzere der zwei jeweils gegenüberliegenden Nutgründe bezogen auf den längeren geraden Abschnitt über zumindest 80% gerade verläuft. Besonders günstig ist ein Wert zwischen 80% und 93%.

Soll ein mit solchen streifenförmigen Lamellen hergestellter Ständer mittels der sogenannten Axialspanntechnik in einem Gehäuse gelagert werden, so ist eine gewisse axiale Klemmfläche am Ständer erforderlich. Dazu ist vorgesehen, dass die zweite Nut einen möglichst geringen Querschnitt aufweist bzw. umgekehrt formuliert, dass die zweiten Zähne eine möglichst große Querschnittsfläche zwar aufweisen, aber dennoch eine relativ kleine Übergangsfläche zwischen zweiten Zähnen und Jochbereich aufweisen. Dementsprechend ist vorgesehen, dass die zweite Nut trapez- oder T-förmig ausgebildet ist. Eine gute Rundheit der rund gebogenen streifenförmigen Lamelle bzw. des Ständerblechpakets lässt sich auch dann erreichen, wenn eine zwischen zwei zweiten Zähne angeordnete Nut eine allgemeine runde Form, beispielsweise oval oder auch kreisrund aufweist.

Darüber hinaus ist ein Ständerblechpaket für eine elektrische Maschine vorgesehen, dass aus erfindungsgemäßen Lamellen hergestellt ist. Ein solches Ständerblechpaket weist eine besonders gute Rundheit auf und ist darüber hinaus mit nur geringen axialen Toleranzen fertigbar. Die Passgenauigkeit des Ständerblechpakets in einem Gehäuse einer elektrischen Maschine steigt. Des Weiteren ist die Kühlung des Ständers durch die vergrößerte Oberfläche verbessert.

Des Weiteren ist vorgesehen, dass eine nach außen gerichtete Seite der zweiten Zähne einen Radius aufweist, der kleiner als der Halbmesser des Ständers ist. Eine konvexe Formgebung der zweiten Zähne bietet für einen Flachpaketständer Vorteile hinsichtlich des Rundbiegens, für das maschinelle Bearbeiten sowie für das Lackieren. Auch das Fügen in ein Lagerschild wird dadurch vereinfacht.

Durch die ausgeprägte konkave Form entsteht eine punktförmige beziehungsweise linienförmige Kontaktfläche zur Biegerolle beziehungsweise zum Biegewerkzeug. Dadurch wird die Reibung während des Biegevorgangs stark herabgesetzt, sodass das Biegen einfacher und damit schonender für Werkzeug und Werkstück vonstatten geht.

Ist beispielsweise vorgesehen, stirnseitig die radial äußere Kante des Ständers so zu bearbeiten, dass eine Fase oder ein radialer Einpass entsteht, so führt ein außen gerundeter Zahn zu kleineren Schneidwinkeln zwischen Schneidwerkzeug und Außenzahn. Die Spanbildung ist verbessert, die Gratbildung im Austrittsbereich des Werkzeugs ist reduziert.

Die runde Kontur der Außenzähne verbessert die Lackierqualität, da Farbanhäufungen und Strömungsabrisse beim Lackieren vermieden werden können.

Durch die konkave Ausführung der Zähne liegt das Gehäuseschild beim Fügen je Zahn nur punktförmig auf.

Des Weiteren ist vorgesehen, dass das Ständerblechpaket, gebildet aus den erfindungsgemäßen Lamellen, zumindest eine Endlamelle mit zweiten Zähnen aufweist, die eine axiale Stirnfläche aufweisen, die durch einen gerundeten Übergang in die nicht axiale Außenkontur der zweiten Zähne übergeht. Auch bei einer derartigen Außenkontur der Lamellen bzw. Endlamelle tritt ein Schneidwerkzeug beispielsweise ein Drehmeißel mit seiner Schneidfläche in einem sehr flachen Winkel, beispielsweise zwischen 30 und 45 Grad in das Werkstück ein. Auch dies führt zu einer deutlich verbesserten Spanbildung und erhöht die Standzeit des Werkzeugs erheblich. Des Weiteren wird der Fügeprozess ins Lagerschild verbessert. Das maschinelle Bearbeiten in axialer Richtung ist verbessert.

Des weiteren ist eine elektrische Maschine mit einem Ständerblechpaket vorgesehen, dass aus erfindungsgemäßen Lamellen besteht. Diese elektrische Maschine weist einen verbesserten Wirkungsgrad auf. Darüber hinaus ist durch die besonders gute Rundheit des Ständerblechpakets die Belastung in den Gehäuseteilen geringer, da sich Belastungen des Ständerblechpakets auf die Gehäuseteile nunmehr über eine größere Fläche verteilen, und sich dadurch die Gehäuseteile von ihrer Festigkeit her optimieren lassen. Die Gehäuseteile sind weniger voluminös und damit leichter.

### Zeichnungen

In den Zeichnungen sind Ausführungsbeispiele einer erfindungsgemäßen streifenförmigen Lamelle, eines Ständerblechpakets sowie eine elektrische Maschine dargestellt. Es zeigen:
Figur 1 ausschnittweise ein erstes Ausführungsbeispiel einer erfindungsgemäßen Lamelle in einer Seitenansicht,
Figur 2 ein zweites Ausführungsbeispiel einer erfindungsgemäßen Lamelle in Seitenansicht,
Figur 3 ein drittes Ausführungsbeispiel einer streifenförmigen Lamelle in einer Seitenansicht,
Figur 4 ein viertes Ausführungsbeispiel einer streifenförmigen Lamelle in einer Seitenansicht,
Figur 5 in vergrößerter Darstellung ausschnittweise einen Jochbereich zwischen zwei ersten und zweiten Zähnen,
Figur 6 ausschnittweise einen Ständer aus Lamellen gemäß dem ersten Ausführungsbeispiel,
Figur 7 ein weiteres Ausführungsbeispiel eines Ständers, der ausschnittweise dargestellt ist,
Figur 8 ein drittes Ausführungsbeispiel eines Ständers in ausschnittweiser Darstellung, Figur 9 bis 13 Seitenansichten des Ständereisen und der Außenzähne,
Figur 14 eine Endlamelle mit gerundetem Übergang von der Stirnseite zur Außenseite der Außenzähne,
Figur 15 symbolhaft eine elektrische Maschine.

### Beschreibung der Ausführungsbeispiele

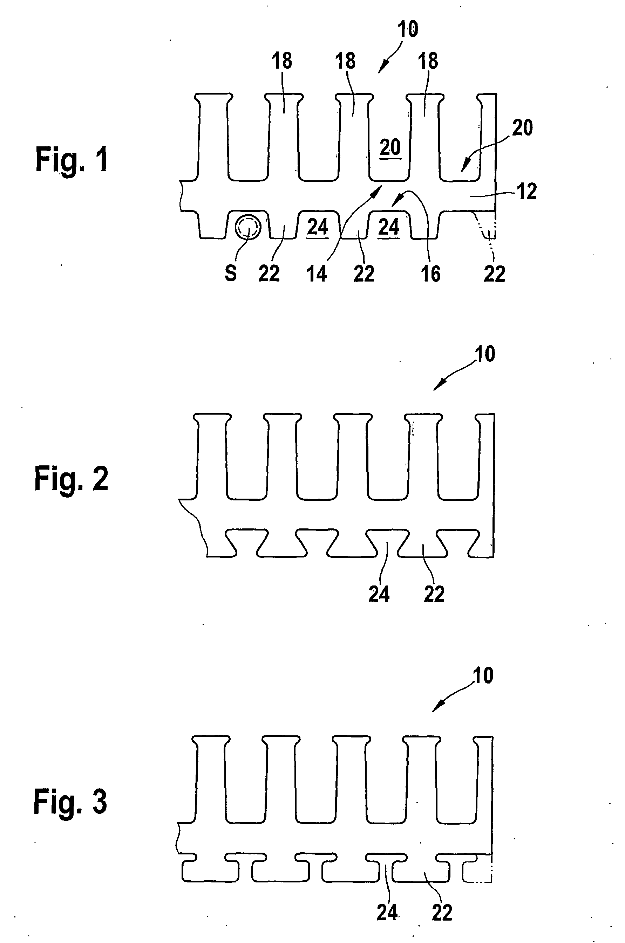

In Figur 1 ist ausschnittweise ein erstes Ausführungsbeispiel einer streifenförmigen Lamelle 10 dargestellt. Die Lamelle 10 hat einen Jochbereich 12, der sich über die gesamte Länge der Lamelle 10 erstreckt. Der Jochbereich 12 hat eine erste Seite 14 und eine zweite Seite 16. Von der ersten Seite 14 gehen erste Zähne 18 aus; zwischen den ersten Zähnen 18 befinden sich erste Nuten 20. Auf der der ersten Seite 14 gegenüberliegenden zweiten Seite 16 sind zweite Zähne 22 angeordnet, die mit dem Jochbereich 12 und den ersten Zähnen 18 einstückig verbunden sind. Zwischen den zweiten Zähnen 22 befinden sich zweite Nuten 24. Bezüglich des Jochbereichs 12 kann eine Achse bestimmt werden, die sich in Figur 1 von links nach rechts durch den Jochbereich 12 erstreckt. Bezüglich der ersten Zähne 18 und zweiten Zähne 22 kann im Zusammenhang mit dieser Achse festgestellt werden, dass die zweiten Zähne 22 an einer Position der ersten Zähne 18 angeordnet sind. Die streifenförmige Lamelle 10 ist im übrigen wie alle weiteren Ausführungsbeispiele für die Lamellen 10 dazu vorgesehen, aus dem gestreckten bezüglich des Jochbereichs zunächst des geraden Zustands in eine runde Form umgeformt zu werden, sodass sich insgesamt eine ringförmige Anordnung einer jeden einzelnen ursprünglich geraden streifenförmigen Lamelle 10 ergibt. Eine jede streifenförmige Lamelle 10 wird mit weiteren, zu einem Stapel angeordneten Lamellen so gebogen, dass sich die ersten Zähne 18 zu einer radialen Innenseite eines fertigen Ständers bzw. einer rund gebogenen streifenförmigen Lamelle erstrecken. Die zweite Zähne 22 zeigen dann nach radial außen. In diesem ersten Ausführungsbeispiel sind die ersten Nuten 20 und auch die zweiten Nuten 24 jeweils leicht trapezförmig ausgebildet, wobei die kürzere parallele Seite eines angenommenen Trapezes die radiale Außenseite des Jochbereichs 12 darstellt. Die Ecken der ersten Nuten 20, d. h. die Übergänge von den zweiten Zähnen 22 in die zweite Seite des Jochbereichs 12 sind verrundet. Im Ausführungsbeispiel nach Figur 1 weisen die ersten Nuten 20 und die zweiten Nuten 24 jeweils von der ersten Seite 14 bzw. zweiten Seite 16 des Jochbereichs 12 ausgehend die gleiche Nutkontur auf, wobei die erste Nut 20 größer ist und dem Zufolge sich ab einer Länge, die der zweiten Nut 24 entspricht, natürlich von der zweiten Nutkontur abweicht. Der angedeutete halbe zweite Zahn 22 ist optional. Aus Bauraumgründen ist im übrigen unabhängig von jeglichen Maßen und Zuordnung von ersten und zweiten Zähnen zueinander vorgesehen, dass bei der montierten elektrischen Maschine in den Nuten 24 zumindest ein Schraubenschaft S angeordnet ist, der zum Verspannen eines aus den Lamellen 10 bestehenden Ständers durch zumindest zwei Gehäuseteile dient.

Im Ausführungsbeispiel nach Figur 2 ist die Lamelle 10 mit einer anderen Außenkontur, d. h. mit anderen zweiten Zähnen 22 versehen. Beim Rundbiegen verhält sich die streifenförmige Lamelle 10 gemäß dem Ausführungsbeispiel nach Figur 2 genau so wie die in Figur 1 dargestellte. Der Unterschied zwischen beiden Ausführungsbeispielen liegt darin, dass die zweiten Zähne 22 des zweiten Ausführungsbeispiels eine größere Oberfläche in axialer Richtung, d. h. wie in der Darstellung gemäß Figur 2 besitzen. Eine auf den in ein Generatorgehäuse eingebauten Ständer in axialer Richtung wirkende Klemmkraft, wirkt damit auf die vergrößerten zweiten Zähne 22. Es kann damit die Klemmkraft erhöht werden bzw. die Belastung für die Zähne 22 wird gesenkt. Die zweite Nut 24 ist im Ausführungsbeispiel nach Figur 2 trapezförmig.

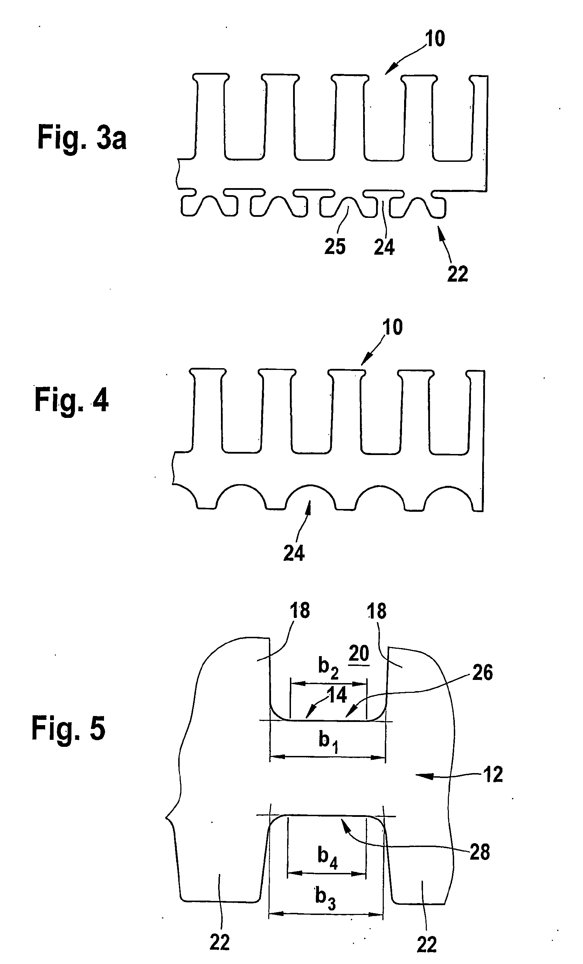

Das Ausführungsbeispiel gemäß Figur 3 zeigt eine hinsichtlich der Belastung durch axiale Spannkräfte weiter optimierte Ausführung der Lamelle 10, in dem die zweiten Nuten 24 nur noch eine T-Form besitzen.

Eine hinsichtlich der beim Rundbiegen des Flachpakets auftretenden Biegeverformung an der Außenseite des Jochbereichs 12 optimierte Variante der zweiten Zähne zeigt Figur 3a. Die dort abgebildeten zweiten Zähne 22 weisen in etwa in ihrer Mitte eine Einkerbung 25 auf, so dass sich die zweiten Zähne 22 nur wenig verformen und somit die Steifigkeit des Flachpakets zur Axialverspannung des Ständers im Gehäuse weitgehend erhalten bleibt.

Gemäß dem Ausführungsbeispiel nach Figur 4 ist vorgesehen, dass die zweiten Nuten 24 eine allgemein runde Form aufweisen. Zu diesen allgemein runden Formen zählen sowohl eine ovale Form als auch eine kreisrunde bzw. halbkreisförmige Form, wie sie in Figur 4 dargestellt ist.

In Figur 5 wird die Geometrie der ersten Nuten 20 und zweiten Nuten 24 am Jochbereich 12 detailliert erläutert. In den ersten Nuten 20 sind zunächst zwei Maße von Interesse. Das erste Maß b₁ stellt die Breite der ersten Nut 20 dar, die dadurch entsteht, in dem Zahnflanken der ersten Nut 20 theoretisch verlängert werden, bis sie die erste Seite 14 bzw. deren gedankliche Verlängerung schneiden. Das Maß zwischen diesen beiden Schnittpunkten ist die Ausgangsgröße. Das zweite Maß bei den ersten Nuten 20 ist das Maß b₂, dass dem reinen geraden Anteil am Nutgrund einer Nut 20 entspricht. Es ist vorgesehen, dass ein Nutgrund 26 zwischen je zwei ersten Zähnen 18 zunächst im wesentlichen gerade verläuft. Des weiteren ist vorgesehen, dass der Nutgrund 26 zwischen je zwei ersten Zähnen 18 auf zumindest 50 % gerade verläuft. Der Mindestwert von 50 % entspricht einem Verhältnis von b₂ zu b₁.

Auch bezüglich der zweiten Zähne 22 bzw. bezüglich des Nutgrundes 28 zwischen zwei zweiten Zähnen ist vorgesehen, dass dieser im wesentlichen gerade verläuft. Die Breite b₃ ist analog zur Breite b₁ ermittelt; die Breite b₄ ist analog zur Breite b₂ ermittelt. Das Verhältnis zwischen b₄ und b₃ ist günstiger Weise derart, dass der Nutgrund 28 zwischen je zwei zweiten Zähnen 22 zumindest 65 % gerade verläuft.

Ein günstiger Wert für das Verhältnis zwischen b₂ und b₁ hat sich zu in etwa 65 % ergeben.

Ein analoges günstiges Verhältnis zwischen b₄ und b₃ beträgt zwischen 60% und 85%, bzw. besser zwischen 60% und 75%. Als am Besten hat sich der bereich zwischen 63% und 71% gezeigt.

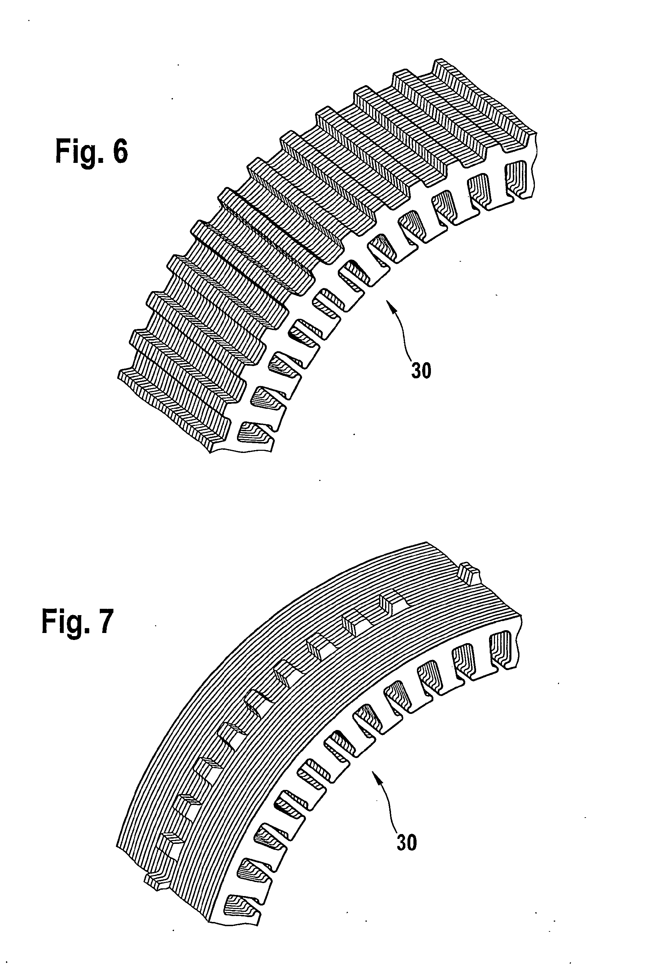

In Figur 6 ist ausschnittweise ein Ständer 30 aus Lamellen 10 gemäß dem Ausführungsbeispiel nach Figur 1 dargestellt. Der Ständer 30 weist an seinem Außenumfang zweite Zähne 22 auf, die bei an sich bekannter Axial-Spanntechnik die entsprechende Axialkraft übertragen.

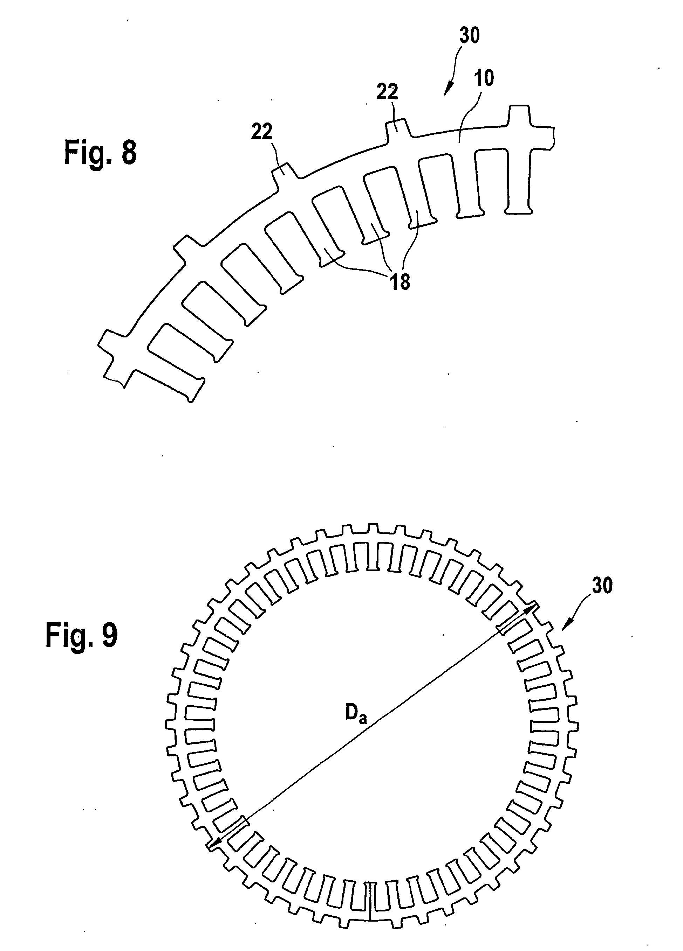

In Figur 7 ist ebenfalls ein Ständer 30 dargestellt. In Abwandlung zum Ausführungsbeispiel nach Figur 6, weist der Ständer 30 jedoch lediglich in einem mittleren Bereich erfindungsgemäße Lamellen auf. Diese Lamellen 10 dient dazu, ebenfalls axiale Kräfte aufzunehmen, wobei diese Lamellen 10 jedoch dazu dienen, die an sich bekannte Mittellamellen Spanntechnik zu verwirklichen. In axialer Richtung rechts und links von den Mittellamellen gemäß dem hier beschriebenen Ständer 30, befinden sich Lamellen ohne zweite Zähne 22, sodass deren Außenumfang im wesentlichen zylindrisch ist. Im Ausführungsbeispiel nach Figur 8, ist ein weiterer Ständer 30 dargestellt, wobei nur jedem zweiten ersten Zahn 18 ein zweiter Zahn 22 zugeordnet ist.

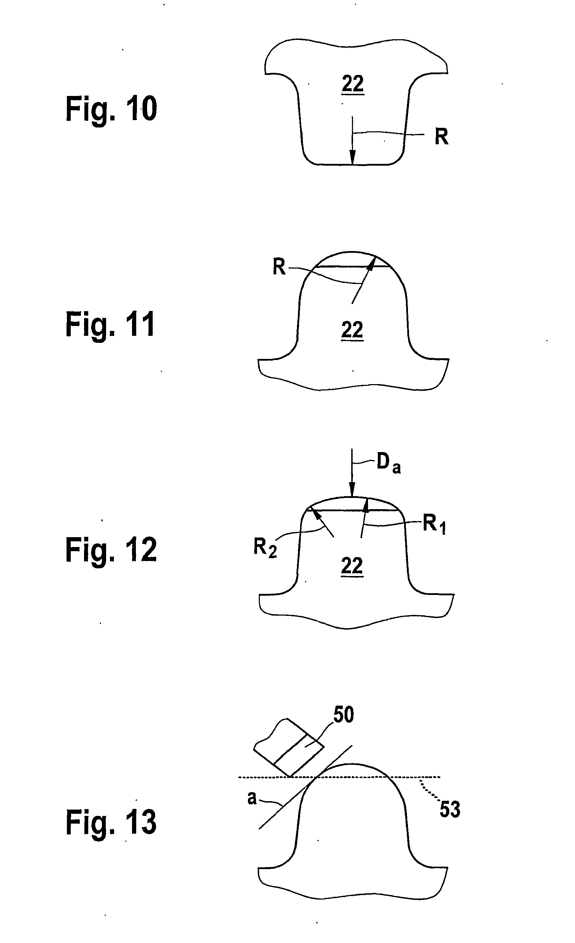

Betrachtet man Figur 9 erkennt man den Außendurchmesser Da eines Ständers 30, der auch die gesamte Länge der zweiten Zähne 22 mit einbezieht. Aus biegetechnischen Gründen ist für die zweiten Zähne 22 an der nach radial außen gerichteten Seite der Zähne 22 eine bestimmte Gestaltung vorgesehen, um beim Biegen des streifenförmigen Ständerblechpakets nach Möglichkeit eine sehr geringe Reibung zwischen der Außenseite des streifenförmigen Ständerblechpakets und einem Biegewerkzeug zu erhalten. In einem Ausführungsbeispiel gemäß Figur 10 ist vorgesehen, dass der zweite Zahn 22 an seiner nach radial außen gerichteten Kontur einen Radius R in der Größe der Hälfte des Durchmessers Da aufweist. Vorzugsweise ist der Radius kleiner als der Halbmesser des Ständers 30.

Gemäß dem in Figur 11 dargestellten Ausführungsbeispiel ist für die nach radial außen gerichtete Kontur ein Radius R in der Größe von etwa 50 - 60% der peripheren Breite eines zweiten Zahns 22 vorgesehen, der Radius ist somit sehr viel kleiner als der Halbmesser des Ständers 30.

Gemäß dem in Figur 12 dargestellten Ausführungsbeispiel ist für die nach radial außen gerichteten Kontur ein sich vom Außendurchmesser Da ausgehend kontinuierlich verkleinernder Radius R vorgesehen, wobei dieser letztlich mit einem Radius R von ca. 15 - 30% der peripheren Breite des zweiten Zahns 22 in die seitlichen Zahnflanken übergeht. Der Außendurchmesser Da ist größer als R1, R1 ist größer als R2. Als günstig für den Radius R hat sich der Wertebereich zwischen 1,5 mm und 10 mm ergeben

Optional ist vorgesehen, dass die zweiten Zähne 22 an ihren auf den Ständer bezogenen nach radial und axial äußeren Ecken angefast sind, Figur 13, oder ein Ständereinpass angedreht, d. h. zylindrisch abgedreht ist, um den Ständer schließlich einfach in eine Öffnung eines den Ständer aufnehmenden Gehäuses einfügen zu können.

Je kleiner ein Winkel a zwischen der nach radial außen gerichteten Kontur und einer vorgesehenen Fasenkante 53, desto günstiger ist der Spanfluss beim Anfasen mittels eines Schneidwerkzeugs 50. Zudem wird die Gratbildung verbessert.

Rundungen an den zweiten Zähnen 22 verbessern zudem die Lackierqualität, da sich so deutlich geringere Farbanhäufungen ergeben.

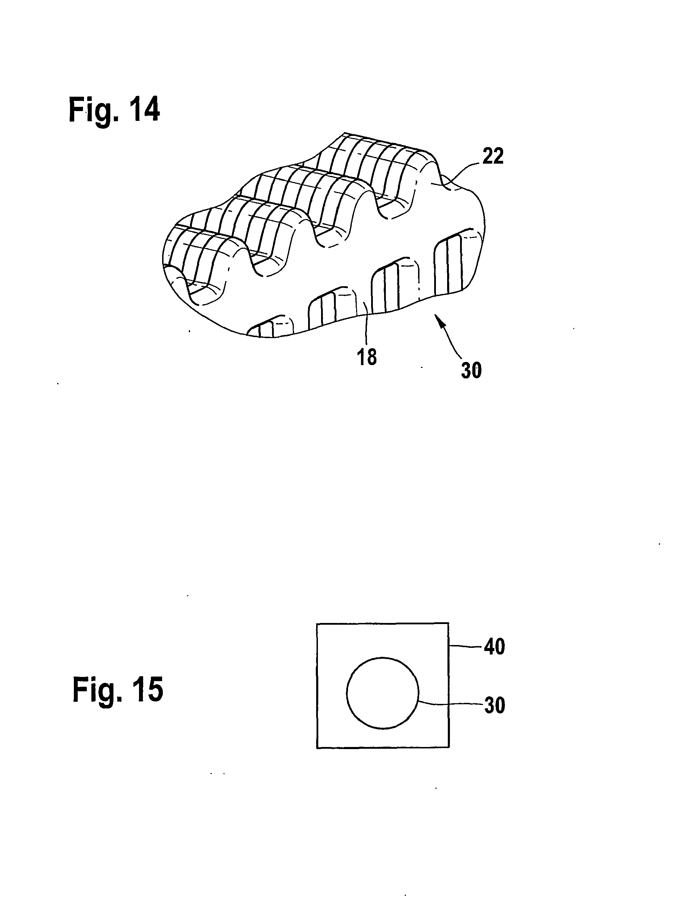

Figur 14 zeigt ausschnittweise ein Ständerblechpaket 30, gebildet aus den erfindungsgemäßen Lamellen, das zumindest eine Endlamelle mit zweiten Zähnen 22 aufweist, die eine axiale Stirnfläche aufweisen, die durch einen gerundeten Übergang in die nicht axiale Außenkontur der zweiten Zähne 22 übergeht. Diese Anformung kann bspw. durch Anprägen an dem äußeren Lamellenstreifen des Flachpakets erfolgen, vor- oder nach dem Paketieren. Die Rundung ist vorzugsweise auf der nach radial außen gerichteten Seite der Außenzähne aber auch auf den peripheren Seiten der Zähne angeordnet. Zu dem ist auch die Kontur der ersten Zähne 18 gerundet, so dass hier eine Beschädigung eingelegter Wicklungen - ganz besonders während dem Rundbiegen des Ständerblechpakets mit der eingelegten Wicklung - vermieden werden kann.

In Figur 15 ist eine elektrische Maschine 40 dargestellt, die einen Ständer 30 bzw. ein Ständerblechpaket aus den erfindungsgemäßen Lamellen 10 trägt.

Insgesamt ist vorgesehen, dass das aus den erfindungsgemäßen Lamellen 10 gebildete Ständerblechpaket, das bereits erwähnte Flachpaket, vor den Rundbiegen mit einer Ständerwicklung versehen wird, deren Spulenseiten sich vor dem Rundbiegen vollständig in den ersten Nuten 20 befinden. Die Anordnung der Spulenseiten ist von der Wicklungsausführung abhängig.

## Patentansprüche

1. Streifenförmige Lamelle für einen Ständer (30) einer elektrischen Maschine (40), mit einem Jochbereich (12) und mehreren einstückig auf einer ersten Seite (14) mit dem Jochbereich (12) verbundenen ersten Zähnen (18), sowie mit dazwischen angeordneten ersten Nuten (20), sowie auf einer zweiten der ersten Seite (14) gegenüberliegenden Seite (16) mit dem Jochbereich (12) einstückig verbundenen zweiten Zähnen (22), die an einer Position der ersten Zähne (18) angeordnet sind sowie mit dazwischen angeordneten zweiten Nuten (24), mit einer Breite b4, die einem reinen geraden Anteil am Nutgrund (28) entspricht, und einer Breite b3, die ein Maß zwischen zwei Schnittpunkten ist, wobei die Schnittpunkte dadurch ermittelt werden, dass Zahnflanken der zweiten Nut (24) theoretisch verlängert werden und gedankliche Verlängerungen des Nutgrunds(28) schneiden, wobei ein Verhältnis zwischen den Breiten b4 und b3 zwischen 60% und 85% beträgt.

2. Streifenförmige Lamelle nach Anspruch 1, **dadurch gekennzeichnet, dass** ein Nutgrund (26) zwischen je zwei ersten Zähnen (18) im wesentlichen gerade verläuft.

3. Streifenförmige Lamelle nach Anspruch 2, **dadurch gekennzeichnet, dass** der Nutgrund (26) zwischen je zwei ersten Zähnen (18) zu mindest 50 % gerade verläuft.

4. Streifenförmige Lamelle nach einem der vorstehenden Ansprüche **dadurch gekennzeichnet, dass** der Nutgrund (28) zwischen je zwei zweiten Zähnen (22) zu mindest 65 % gerade verläuft.

5. Streifenförmige Lamelle nach einem der vorstehenden Ansprüche, **dadurch gekennzeichnet, dass** die zweite Nut (24) trapez- oder T-förmig ist.

6. Streifenförmige Lamelle nach einem der vorstehenden Ansprüche, **dadurch gekennzeichnet, dass** eine nach außen gerichtete Seite der zweiten Zähne (22) einen Radius aufweist, der kleiner als der Halbmesser des Ständers (30) ist.

7. Ständerblechpaket für eine elektrische Maschine, **dadurch gekennzeichnet, dass** dieses zumindest teilweise aus Lamellen (10) nach einem der vorhergehenden Ansprüche hergestellt ist.

8. Ständerblechpaket nach dem vorstehendem Anspruch, **dadurch gekennzeichnet, dass** dieses eine Endlamelle mit zweiten Zähnen (22) aufweist, die eine axiale Stirnfläche aufweisen, die durch einen gerundeten Übergang in die nicht axiale Außenkontur der zweiten Zähne (22) übergeht.

9. Elektrische Maschine mit einer Ständerblechpaket nach Anspruch 7 oder 8.

## Claims

1. Strip-like lamination for a stator (30) of an electrical machine (40), having a yoke region (12) and a plurality of first teeth (18) which are integrally connected to the yoke region (12) on a first side (14), and having first slots (20) which are arranged between the said first teeth, and second teeth (22) which are integrally connected to the yoke region (12) on a second side (16), which is opposite the first side (14), and are arranged in the same position as the first teeth (18), and having second slots (24) which are arranged between the said second teeth and have a width b4 which corresponds to a pure straight portion of the slot base (28), and a width b3 which is a dimension between two points of intersection, with the points of intersection being determined by tooth flanks of the second slot (24) being theoretically extended and intersecting imaginary extensions of the slot base (28), with the ratio between the widths b4 and b3 being between 60% and 85%.

2. Strip-like lamination according to Claim 1, **characterized in that** a slot base (26) between two respective first teeth (18) runs such that it is substantially straight.

3. Strip-like lamination according to Claim 2, **characterized in that** the slot base (26) between two respective first teeth (18) runs such that it is at least 50% straight.

4. Strip-like lamination according to one of the preceding claims, **characterized in that** the slot base (28) between two respective second teeth (22) runs such that it is at least 65% straight.

5. Strip-like lamination according to one of the preceding claims, **characterized in that** the second slot (24) is trapezoidal or T-shaped.

6. Strip-like lamination according to one of the preceding claims, **characterized in that** a side of the second teeth (22) which is directed outwards has a radius which is smaller than the radius of the stator (30).

7. Laminated stator core for an electrical machine, **characterized in that** this laminated stator core is produced at least partially from laminations (10) according to one of the preceding claims.

8. Laminated stator core according to the preceding claim, **characterized in that** this laminated stator core has an end lamination with second teeth (22) which have an axial end face which merges into the non-axial outer contour of the second teeth (22) by means of a rounded transition.

9. Electrical machine having a laminated stator core according to Claim 7 or 8.

## Revendications

1. Lame en forme de bande pour un stator (30) d'une machine électrique (40), ayant une zone en forme de culasse (12) et plusieurs premières dents (18) reliées en une pièce, d'un premier côté (14), à la zone en forme de culasse (12), ainsi que des premières rainures (20) disposées entre ces dents, et des secondes dents (22) reliées en une pièce avec la zone en forme de culasse (12) d'un deuxième côté (16) situé face au premier côté (14), disposées à une position des premières dents (18), ainsi que des secondes rainures (24) disposées entre ces dents, ayant une largeur b4 qui correspond à une partie purement rectiligne au fond de la rainure (28) et une largeur b3 qui est une mesure entre deux points d'intersection, et, pour déterminer les points d'intersection, les flancs des dents de la deuxième rainure (24) sont prolongés théoriquement et les prolongements imaginaires coupent le fond de la rainure (28), le rapport entre les largeurs b4 et b3 étant de 60 % à 85 %.

2. Lame en forme de bande selon la revendication 1,
**caractérisée en ce qu'**
un fond de rainure (26) s'étend de façon sensiblement rectiligne entre chacune des deux premières dents (18).

3. Lame en forme de bande selon la revendication 2,
**caractérisée en ce que**
le fond de rainure (26) s'étend de façon rectiligne à au moins 50 % entre chacune des deux premières dents (18).

4. Lame en forme de bande selon l'une des revendications précédentes,
**caractérisée en ce que**
le fond de rainure (26) s'étend de façon rectiligne à au moins 65 % entre chacune des deux secondes dents (22).

5. Lame en forme de bande selon l'une des revendications précédentes,
**caractérisée en ce que**
la seconde rainure (24) est trapézoïdale ou en forme de T.

6. Lame en forme de bande selon l'une des revendications précédentes,
**caractérisée en ce qu'**
une face des secondes dents (22), dirigée vers l'extérieur, présente un rayon inférieur à celui du stator (30).

7. Empilage de tôles de stator destiné à une machine électrique,
**caractérisé en ce qu'**
il est fabriqué en partie à partir de lames (10) selon l'une des revendications précédentes.

8. Empilage de tôles de stator selon la revendication précédente,
**caractérisé en ce qu'**
il présente une lame d'extrémité ayant des secondes dents (22) qui présentent une face frontale axiale, celle-ci se transformant, par une transition arrondie, en contour extérieur non axial des secondes dents (22).

9. Machine électrique avec un empilage de tôles de stator selon la revendication 7 ou 8.
